# EUROPEAN PATENT APPLICATION

(11) **EP 4 841 511 A1**
(43) Date of publication of application: **18.11.2026**
(21) Application number: 26174317.3
(22) Date of filing: 23.04.2026
(51) Int. Cl.: G06N 3/0475, G06N 3/0495

(54) **CONTENT GENERATION**

(30) Priority: 12.05.2025 GB 202507267
(71) Applicant: Vodafone Group Services Limited, Newbury RG14 2FN (GB)
(72) Inventor: MEY, Oliver, London, W2 6BY (GB)
(74) Representative: Boult Wade Tennant LLP

(57) **Abstract**

Systems and methods for generating content and training models for use in generating content. It embodiments, an input prompt for implementing a generative AI model is received. The input prompt is stored in a session context. A plurality of segments of a model output are sequentially generated in response to the input prompt. Generating each segment of the model output may include: selecting a generative AI model, from a plurality of generative AI models having different precision levels, for generating a next segment of the model output. The generative AI model is selected from the plurality of generative AI models in dependence on the session context. The selected generative AI model is implemented, based on the session context, to generate a next segment of the model output. The generated segment of the model output is added to the session context.

## Description

### TECHNICAL FIELD

The present disclosure relates to methods and systems for generating content and training models for use in generating content. The methods and systems disclosed herein may find particular application in the use of generative artificial intelligence for generating content.

### BACKGROUND

Artificial Intelligence (AI), particularly generative AI, has seen significant advancements, leading to widespread adoption across various industries and use cases and a rapidly growing user base. Generative AI models are capable of generating high-quality data outputs, such as text, images, video and sound. However, with their growing popularity, providing real-time responsiveness and high-quality outputs requires significant computational resources.

The rapid expansion of the user base for generative AI applications has caused a surge in the demand for computational resources. This growth imposes significant pressures on maintaining low latency and high-quality outputs, both of which are important for user satisfaction and operational efficiency. When user requests increase, AI systems often allocate computational resources dynamically to prevent latency spikes that can degrade the user experience. Sustaining adequate performance under these conditions requires innovative strategies to manage resources effectively.

Current methods employed for enhancing resource efficiency in generative AI models include model compression techniques such as pruning and quantization, which reduce model size and computational overhead. Distillation, another widely used approach, involves transferring knowledge from large models (teachers) to smaller ones (students), which perform similarly with fewer resources. Despite these methods, existing approaches face limitations in scaling to an ever increasing user base.

For example, quantization offers a potential pathway to enhance inference efficiency. However, quantization approaches, such as static or uniform quantization, often impose a trade-off between inference speed and output quality. While quantization can be used to accelerate computation when implementing a model in inference mode, it can lead to noticeable quality degradation, particularly for complex or nuanced queries. Layer-adaptive quantization represents a potential improvement, allowing for varying quantization levels across different model layers. However, layer-adaptive quantization still does not provide an optimal balance between performance and quality across a diverse nature of user queries.

Furthermore, serving a large number of concurrent users with full-precision generative AI models necessitates either substantial hardware investment in model replication or complex batching strategies. Replicating full-precision models for each user or batch is economically prohibitive and inefficient in resource utilization. Batching, while improving throughput, can introduce latency variability and complexity in managing user-specific contexts. Existing concurrent inference techniques often focus on optimising resource allocation or batching strategies at the request level, but they do not include dynamic precision adjustment within individual requests and across concurrent sessions.

It is in this context the present disclosure has been devised.

### SUMMARY

It has been realised that resource efficiency and latency can be improved when implementing generative AI models and whilst reducing any impact on output quality. Methods are proposed in which a plurality of different generative AI models having different precision levels are provided. It has been realised that a most computationally efficient generative AI model from the plurality of different generative AI models which generates an output of satisfactory quality can vary for different segments of a model output. Methods are therefore proposed in which a suitable generative AI model, having a suitable precision level, can be selected to generate each segment of model output. In particular, a generative AI model may be selected per model output segment and in dependence on the model inputs (a session context) based on which the next segment of model output is to be generated. In this way the utilisation of different generative AI models having different precision levels may be optimised to maintain output quality whilst improving efficient use of computational resources.

For example, the task of generating some segments of model output may be relatively simple and a generative AI model having a relatively low precision level may still produce a good quality output for such segments of model output. For example, for some segments of model output a generative AI model having a relatively low precision level may generate a similar output to a generative AI model having a relatively high precision level. In such a scenario a generative AI model having a relatively low precision level may be selected to generate a next segment of model output with improved computational efficiency relative to the use of a generative AI model having a relatively high precision level.

On the other hand, the task of generating some segments of model output may be relatively complicated and generative AI models having different precision levels may produce substantially different model outputs for the same model inputs. For example, a generative AI model having a relatively high precision level may produce a substantially better quality model output than a generative AI model having a relatively low precision level when faced with a relatively complicated task of generating a next segment of model output. In such a scenario, a generative AI model having a relatively high precision level may be selected to generate a next segment of model output to maintain a good output quality.

According to a first aspect of the present disclosure there is provided a computer implemented method of generating content. The method comprises: receiving an input prompt for implementing a generative artificial intelligence, AI, model; storing the input prompt in a session context; and sequentially generating a plurality of segments of a model output in response to the input prompt. Generating each segment of the model output comprises: selecting a generative AI model, from a plurality of generative AI models, for generating a next segment of the model output, wherein the plurality of generative AI models comprise models having different precision levels and wherein the generative AI model is selected from the plurality of generative AI models in dependence on the session context; implementing the selected generative AI model, based on the session context, to generate a next segment of the model output; and adding the generated segment of the model output to the session context.

As described above, the selection of a generative AI model per model output segment allows a suitable generative AI model to be selected to generate each model output segment. In this way, generative AI model selection may be optimised to improve computational efficiency whilst achieving good quality model outputs. For example, a lower precision level generative AI model may be selected for generating model output segments for which a lower precision level generative AI model generates a similar output to a higher precision level generative AI model. In such a situation a lower precision level generative AI model may be implemented to generate the next model output segment, thereby improving computational efficiency, and whilst still providing good quality model output. A higher precision level generative AI model may be selected for generating model output segments for which a lower precision level generative AI model generates a substantially different output to a higher precision level generative AI model. In such a situation a higher precision level generative AI model may be implemented to generate the next model output segment in order to maintain the quality of the model output. In general, the selection of a generative AI model per model output segment allows for flexible optimisation to balance computational efficiency, resource usage and latency with output quality. This may, for example, allow for reductions in latency and/or an increase in a number of inputs which are processed in parallel, without increasing computational resources used and whilst maintaining a good model output quality. The methods disclosed herein may therefore find particular applicability in the parallel processing of a plurality of inputs to generate a plurality of model outputs in parallel. The methods described herein may therefore enable efficient and scalable concurrent generative AI inference. For example, the methods described herein may find application in cloud-based AI inference services (which may, for example, be implemented in hardware at a data centre). Such services may receive large numbers of inputs, for generative AI model inference to be processed in parallel. The methods described herein allow for efficient processing of such generative AI model inference. For example, the plurality of generative of AI models may form a shared repository of generative AI models, which can be implemented in parallel to process different user inputs and generate different segments of different model outputs.

Implementing the selected generative AI model, based on the session context, to generate a next segment of the model output may comprise implementing the selected generative AI model based on all or part of the session context. For example, the session context may include information in addition to the input prompt and any model output segments which have been generated in response to the input prompt. Such additional information may, for example, include previous input prompts and/or model outputs, which might have been generated as part of the same user session. Further examples of additional information which might be included in a session context may include one or more prompts which do not originate from a user input, such as, a system prompt and/or a meta prompt. Implementing the selected generative AI model, based on the session context, to generate a next segment of the model output may comprise implementing the selected generative AI model based on at least the received input prompt (the most recent input prompt for which the model output is being generated). Implementing the selected generative AI model, based on the session context, to generate a next segment of the model output may comprise implementing the selected generative AI model based on any model output segments which have already been generated in response to the received input prompt (the most recent input prompt for which the model output is being generated). Implementing the selected generative AI model, based on the session context, to generate a next segment of the model output may comprise implementing the selected generative AI model based on one or more additional elements of the session context.

Put another way, the generated segment of the model output may be added to the inputs used by a generative AI model to generate the next segment of the model output. The term "session context" may be used herein to refer to all information which may form all or part of an input to a generative AI model for generating a next segment of model output. The session context may be updated during the sequential generation of a plurality of segments of a model output to include model output segments already generated as part of the sequential generation.

Selecting a generative AI model, from a plurality of generative AI models, may comprise predicting a lowest precision generative AI model, from the plurality of generative AI models, which is predicted to produce a next segment of the model output, based on the session context, which meets an acceptability criterion.

Selecting a generative AI model, from a plurality of generative AI models, may comprise: providing the session context to a routing model and receiving an indication of a selected generative AI model output by the routing model in dependence on the session context. The routing model may be configured through training to select a lowest precision generative AI model, from the plurality of generative AI models, which is predicted to produce a next segment of the model output which meets an acceptability criterion.

The plurality of generative AI models may comprise a highest precision generative AI model and one or more lower precision generative AI models having a lower precision level than a precision level of the highest precision generative AI model. The routing model may be configured through training to predict, for each lower precision level generative AI model an associated measure of difference between: an output generated by the lower precision generative AI model, based on the session context, and an output generated by the highest precision generative AI model, based on the same session context. The routing model may be configured to determine a lowest precision generative AI model of the plurality of generative AI models having an associated predicted measure of difference which is less than a threshold measure of difference.

The routing model may be configured to extract contextual features from an input session context and determine, based on the extracted contextual features, a lowest precision generative AI model, from the plurality of generative AI models, which will produce an output which meets the acceptability criterion.

The plurality of generative AI models may comprise a highest precision generative AI model and one or more lower precision generative AI models having a lower precision level than a precision level of the highest precision generative AI model. Each of the one or more lower precision generative AI models has an associated predicted measure of difference between: an output generated by the lower precision generative AI model, based on the session context, and an output generated by the highest precision generative AI model, based on the same session context. A lower precision generative AI model meeting the acceptability criterion may comprise the associated predicted measure of difference for that lower precision generative AI model being less than a threshold measure of difference.

The output generated by the lower precision generative AI model, based on the session context and the output generated by the highest precision generative AI model, based on the same session context, may each comprise a probability distribution. The associated measure of difference may comprise a measure of difference between the probability distributions. Each of the probability distributions may comprise a probability associated with each of a plurality of candidate next segments of a model output, the probabilities representing a probability of outputting the candidate next segment based on the session context.

The session context may be associated with a user session. The session context may comprise: one or more previous input prompts received as part of the same user session, and/or one or more previous model outputs generated as part of the same user session.

The plurality of segments of the model output may comprise tokens.

The plurality of generative AI models comprising models having different precision levels, may comprise generative AI models configured to operate using different bit-length representations.

The plurality of generative AI models comprising models having different precision levels may comprise generative AI models having different model sizes.

Generative AI models having different model sizes may comprise models represented by different numbers of parameters. Generative AI model having different model sizes may comprise models comprising different numbers of nodes (e.g., neurons).

The method may comprise loading each of the plurality of generative AI models into memory prior to sequentially generating the plurality of segments of the model output.

The method may comprise: receiving a plurality of input prompts related to different user sessions; storing the input prompts in different session contexts; and sequentially generating a plurality of segments of a model output in response to each input prompt in parallel with each other. Generating each segment of the model output for each model input may comprise: selecting a generative AI model, from the plurality of generative AI models, for generating a next segment of the model output, wherein the generative AI model is selected from the plurality of generative AI models in dependence on the session context corresponding to the input prompt for which the model output is being generated; implementing the selected generative AI model, based on the session context corresponding to the input prompt for which the model output is being generated, to generate a next segment of the model output; and adding the generated segment of the model output to the session context corresponding to the input prompt for which the model output is being generated.

According to a second aspect of the present disclosure there is provided a computer implemented method of training a routing model. The method comprises: receiving a plurality of different training session contexts; for each training session context: implementing each of a plurality of generative AI models to produce an output based on the session context, wherein the plurality of generative AI models comprise a highest precision generative AI model and one or more lower precision generative AI models having a lower precision level than a precision level of the highest precision generative AI model; determining a measure of difference between each output generated by the one or more lower precision generative AI models and the output generated by the highest precision generative AI model; and training a routing model based on the measures of difference determined for each of the one or more lower precision generative AI models and each of the training session contexts, wherein the routing model is trained to determine, for an input session context, a lowest precision generative AI model, from the plurality of generative AI models, which will produce an output which meets an acceptability criterion.

A generative AI model meeting the acceptability criterion may comprise the measure of difference for that generative AI model with respect to a highest precision generative AI model being less than a threshold measure of difference.

The routing model may be trained to determine, for an input session context, a predicted measure of difference between outputs generated by each of the lower precision generative AI models and an output generated by the highest precision generative AI model.

The outputs produced by the plurality of generative AI models, based on the training session context, may each comprise a probability distribution. Each of the probability distributions may comprise a probability associated with each of a plurality of candidate next segments of a model output. The probabilities may represent a probability of outputting the candidate next segment based on the training session context.

Determining a measure of difference between an output generated by a lower precision generative AI models and an output generated by the highest precision generative AI model, may comprise determining a measure of relative entropy of the probability distribution generated by the lower precision generative AI model and the probability distribution generated by the highest precision generative AI model.

The routing model may be configured to extract contextual features from an input session context and determine, based on the extracted contextual features, a lowest precision generative AI model, from the plurality of generative AI models, which will produce an output which meets an acceptability criterion.

The plurality of generative AI models may each comprise a generative AI model configured to: for each implementation of the generative AI model, generate a next segment of a model output based on a session context. The session context may comprise: one or more input prompts received as part of a user session associated with the session context; and/or one or more segments of model output generated as part of the user session associated with the session context.

According to a third aspect of the present disclosure there is provided a computing system configured for generating content, the computing system being configured to: receive an input prompt for implementing a generative artificial intelligence, AI, model; store the input prompt in a session context; and sequentially generate a plurality of segments of a model output in response to the input prompt. Generating each segment of the model output comprises: selecting a generative AI model, from a plurality of generative AI models, for generating a next segment of the model output, wherein the plurality of generative AI models comprise models having different precision levels and wherein the generative AI model is selected from the plurality of generative AI models in dependence on the session context; implementing the selected generative AI model, based on the session context, to generate a next segment of the model output; and adding the generated segment of the model output to the session context.

According to a fourth aspect of the present disclosure there is provided a computing system configured for training a routing model, the computing system being configured to; for each training session context: implement each of a plurality of generative AI models to produce an output based on the session context, wherein the plurality of generative AI models comprise a highest precision generative AI model and one or more lower precision generative AI models having a lower precision level than a precision level of the highest precision generative AI model; determine a measure of difference between each output generated by the one or more lower precision generative AI models and the output generated by the highest precision generative AI model; and train a routing model based on the measures of difference determined for each of the one or more lower precision generative AI models and each of the training session contexts, wherein the routing model is trained to determine, for an input session context, a lowest precision generative AI model, from the plurality of generative AI models, which will produce an output which meets an acceptability criterion.

According to a fifth aspect of the present disclosure there is provided a computer readable medium storing instructions, which when executed, cause a method according to the first aspect or the second aspect to be implemented.

The computer readable medium may comprise a non-transitory computer readable medium.

**It** will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE DRAWINGS

Certain examples of the present disclosure will now be described, with reference to the accompanying drawings, in which:
- FIG. 1 is a flow diagram illustrating an example process of generating content;
- FIG. 2 is a flowchart of an example method of generating content;
- FIG. 3 is a flowchart of a further example method of generating content;
- FIG. 4 is a flowchart of an example method for training a routing model;
- FIG. 5 is a process flow diagram illustrating an example process flow associated with training a routing model;
- FIG. 6 is a schematic illustration of the architecture and process flow of an example routing model; and
- FIG. 7 is a schematic illustration of an example electronic device which may be used to implement all or part of any method and/or system described herein.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

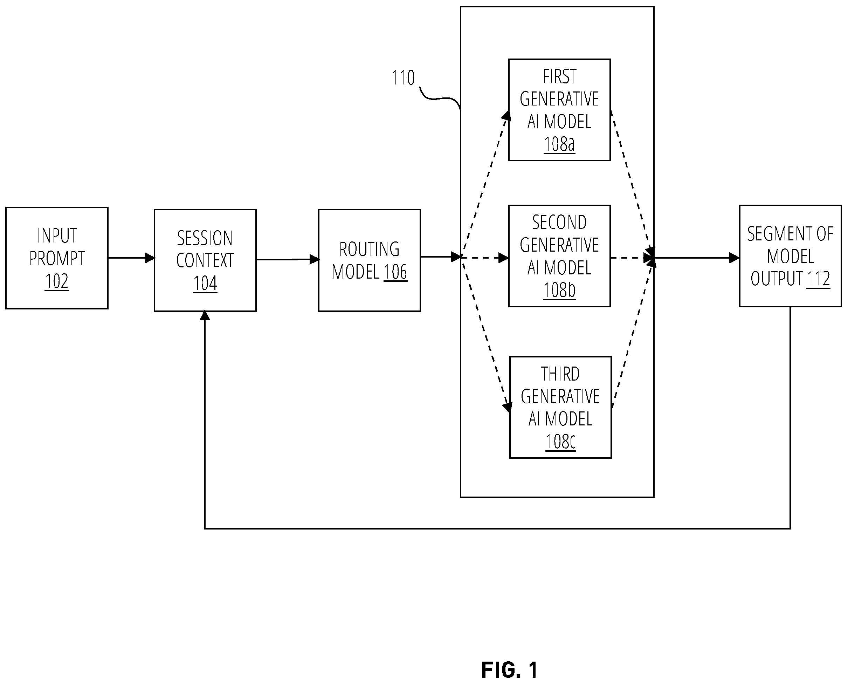

FIG. 1 is a flow diagram illustrating a process of generating content according to examples presented herein. The content generation process utilises a plurality of generative AI models 110. In the example illustrated in FIG. 1, the plurality of generative AI models 110 comprise a first generative AI model 108a, a second generative AI model 108b and a third generative AI model 108c. However, in other examples, a different number of generative AI models may be used.

Each of the generative AI models 108a, 108b, 108c are configured to generate a next segment of a model output when implemented. The generative AI models 108a, 108b, 108c may each comprise models which are similarly or identically configured to perform the same tasks. For example, each of the generative AI models 108a, 108b, 108c may be of the same or corresponding type, architecture and/or may be trained using the same training data and/or the same training process.

**In** at least some examples, the generative AI models 108a, 108b, 108c may comprise large language models (LLMs). Typically LLMs are configured to iteratively generate a next segment of a model output based on an input prompt. The segments of model output may be referred to as tokens which may comprise words, characters and/or sub-words. A typical input prompt for an LLM comprises a text based input, which may be converted to a numerical representation for processing. For example, the text input may be converted to vector embeddings. An LLM may then be implemented iteratively to generate a segment of model output (e.g., token) with each iteration. Generated model output segments (e.g., tokens) may be fed back to form part of the model input for subsequent iterations. Such an iterative process may be continued until a stopping criterion is met, at which point the model output comprises the sequence of model output segments (e.g., tokens) generated by the iterations. The model output may initially be provided in a numerical representation (e.g., vector embeddings), which may then be converted to text for presentation to a user or for further processing.

Whilst reference is made to the generative AI models 108a, 108b, 108c comprising LLMs, in other examples, the generative AI models 108a, 108b, 108c may comprise different forms of model for generating content. For example, the generative AI models 108a, 108b, 108c may comprise, image, video and/or audio generating models, where the output is generated iteratively in segments. For example, some image, video and/or audio generating models may be implemented iteratively to generate a model output in segments (e.g., in a corresponding way to the iterative operation of an LLM described above) such as pixels, frames, audio samples etc. In general, the methods described herein may be applied with any generative AI model which generates a model output in segments through iterative implementation of the generative AI model. That is, the plurality of generative AI models 110 may comprise any generative AI models 108a, 108b, 108c configured to generate a model output in segments through iterative implementation of the generative AI models 108a, 108b, 108c.

The plurality of generative AI models 110 comprise models having different precision levels. That is, whilst the plurality of generative AI models 110 may be of the same or corresponding type, and/or architecture and/or may be trained using the same training data and/or the same training process, the different generative AI models 108a, 108b, 108c have different precision levels. A precision level of a generative AI model may correspond with a precision level with which the generative AI model is configured to perform mathematical calculations for implementing the generative AI model. For example, a precision level of a generative AI model may correspond with a precision level with which the generative AI model is configured to perform matrix multiplications and/or other arithmetic operations which are performed as part of implementing the generative AI model. A precision level of a generative AI model may correspond with a precision level at which model parameters (such as weights, biases etc.) are stored in memory. A precision level may correspond with a bit-length used for representation, calculation and/or storage of floating point numbers. For example, bit-lengths of 64-bit, 32-bit, 16-bit, 8-bit, and/or 4-bit may be used to represent floating point numbers for storing in memory and/or for performing arithmetic calculations for implementing a generative AI model. Different precision generative AI models 108a, 108b, 108c may use different bit-length representations.

A precision level of a generative AI model 108a, 108b, 108c may be characterised and described in terms of the bit-length representation that is uses. For example, a generative AI model may be described as having a 32-bit precision level. Such a generative AI model may perform arithmetic calculations for implementing the generative AI model using a 32-bit representation of floating point numbers. Additionally or alternatively, the generative AI model may be stored in memory by storing model parameters (such as weights, biases etc.) using a 32-bit representation. Similarly, a 16-bit precision level generative AI model may perform arithmetic calculations for implementing the generative AI model using a 16-bit representation of floating point numbers and/or may be stored in memory by storing model parameters (such as weights, biases etc.) using a 16-bit representation.

In at least some examples, a precision level may additionally or alternatively correspond with a size of a generative AI model. For example, generative AI models having different sizes may be configured (trained) to perform corresponding functionality but with different precision levels based on the size of the model. The size of a generative AI model may, for example, correspond with a number of nodes (e.g., neurons) and/or parameters used to represent and implement the model. In general, larger generative AI models (e.g., models comprising a larger number of nodes and/or parameters) may generate output with a higher precision than smaller generative AI models (e.g., models comprising a smaller number of nodes and/or parameters). A larger generative AI model may therefore be referred to as having a higher precision level than an equivalent smaller generative AI model. In such examples, a precision level of a generative AI model 108a, 108b, 108c may be characterised and described in terms of the number of parameters which it uses. For example, a highest precision level generative AI model may comprise approximately 400 billion parameters and one or more lower precision level generative AI models may comprise a smaller number of parameters such as 70 billion parameters and/or 7 billion parameters.

As described above a precision level of generative AI models may characterised in a number of different ways such as in terms of a bit-length representation and/or a size of model used. In at least some examples, these factors may be combined and different generative AI models having different precision levels may comprise different bit-length representations and/or different model sizes (e.g., number of parameters).

The plurality of generative AI models 110 may generally comprise a highest precision generative AI model and one or more lower precision generative AI models. The highest precision generative AI model may be referred to as a full precision generative AI model. The one or more lower precision generative AI model may be referred to as quantised generative AI models. The reduction of precision level of a generative AI model from the highest (full) precision generative AI model to a lower precision (quantised) generative AI model may, in at least some examples, be referred to as quantisation.

The highest precision generative AI model may, in at least some examples, comprise a generative AI model having a precision level of 64-bits or 32-bits. The one or more lower precision generative AI models use bit length representation which are less than the bit length representation used by the highest precision generative AI model. For example, the one or more lower precision generative AI models may use a bit length representation of 32-bits (where the highest precision level AI model has a 64-bit precision level), 16-bits, 8-bits and/or 4-bits. However, as described above, in at least some examples, different precision levels may additionally or alternatively be realised in different ways such as by providing generative AI models having different sizes (e.g., number of parameters).

As was explained above, each of the plurality of generative AI models 110 may be of the same or corresponding type, and/or architecture and/or may be trained using the same training data and/or the same training process. For example, a single generative AI model may be trained using a highest precision level (e.g., 64-bit or 32-bit). Model parameters learnt through training may then be converted to different bit-length representations for utilisation in different precision-level models. Each generative AI model may then be configured to utilise the model parameters stored using a bit-length representation corresponding to the precision level of the model. Each generative AI model may additionally or alternatively be configured to perform arithmetic operations using a floating point representation corresponding to the precision level of the model when operating in inference mode.

In alternative examples, generative AI models having different precision levels may be separately trained using a training process operated with a precision level corresponding to the precision level of the generative AI model. For example, a 32-bit generative AI model may be trained using 32-bit floating bit representations during training and for model parameter storage. Similarly, a 16-bit generative AI model may be trained using 16-bit floating bit representations during training and for model parameter storage. Such models may however have corresponding architectures, and/or may be trained using corresponding training processes and/or corresponding training data (with the only difference being the precision level used).

Additionally or alternatively, generative AI models having different sizes (e.g., having different numbers of nodes and/or parameters) may be trained using corresponding (e.g., the same) training data. The generative AI models may be trained to perform corresponding inference processes but using different model sizes. Such models comprise generative AI models having different precision levels.

Whichever training process is used, each of the plurality of generative AI models 110 may be configured (trained) to perform the same or corresponding tasks but with different precision levels. Generally the higher the precision level of a generative AI model, the higher the accuracy in generating a model output when run in inference mode. For example, a generative AI model having a higher precision level may generally generate model outputs which are more closely representative of the training data on which they are trained and/or may be of a higher perceived quality. Conversely, the higher the precision level of a generative AI model, the more computational resources may be needed to run the generative AI model in inference mode. For example, higher precision level generative AI models may utilise more memory, processing power and/or computational time when performing a corresponding inference task on corresponding hardware. Put another way, a lower precision level generative AI model may be less computationally expensive to implement than a higher precision level generative AI model. When implemented on corresponding hardware and performing corresponding inference tasks, a higher precision level generative AI model may therefore be associated with increased latency when compared to a lower precision generative AI model.

According to examples disclosed herein, a plurality of generative AI models 110 having different precision levels may be adaptively used to generate model output so as to produce high quality model outputs whilst utilising one or more lower precision level generative AI models to reduce the computational resources (which may include time) needed to generate the model output. In particular, a generative AI model from a plurality of generative AI models 110 may be selected to generate each segment of a model output so as to use a lowest precision generative AI model for each model output segment which maintains an acceptable level of accuracy and/or output quality. In this way, the computational resources required to generate a model output may be reduced, whilst maintaining a high quality output.

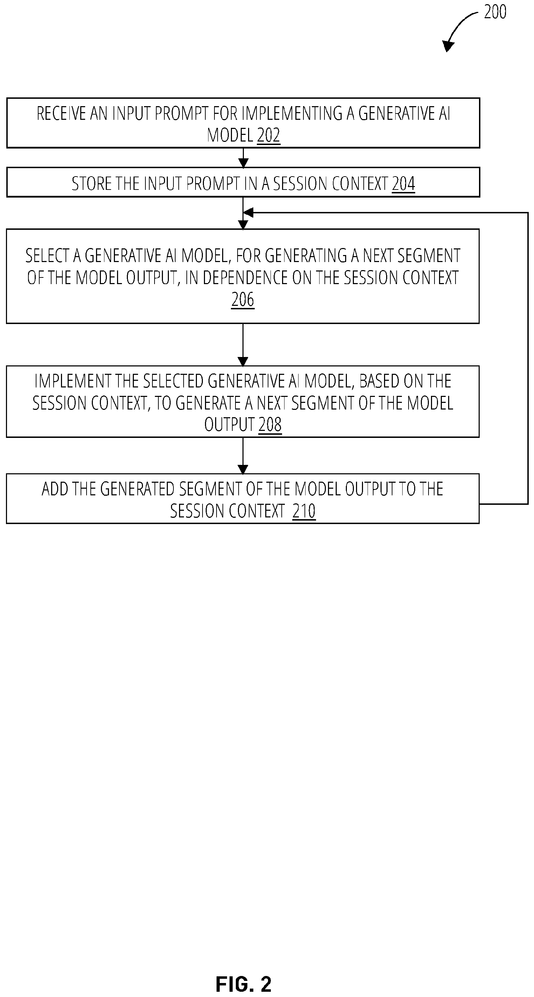

FIG. 2 is a flowchart of an example method 200 of generating content. The flowchart of FIG. 2 may correspond with the flow diagram of FIG. 1 and both will be described in conjunction below. The process represented by the flow diagram of FIG. 1 and the method 200 of FIG. 2 may be implemented by using one or more computing devices (and thus the method 200 be a computer implemented method 200). In examples in which a plurality of cooperating computing devices are used, this may be referred to as a computing system.

At step 202 of the method 200 of FIG. 2 an input prompt for implementing a generative AI model is received. This is represented in the flow diagram of FIG. 1 by input prompt 102. The input prompt 102 may comprise any suitable input for implementing a generative AI model. For example, the input prompt 102 may comprise plain text comprising a written description of a query or instruction based on which a generative AI model is to be implemented. Additionally or alternatively, the input prompt 102 may comprise one or more images, audio and/or video. The input prompt 102 may comprise, or at least may be based upon, a user input. For example, a user my use a user interface of a computing device to input a text query and/or instruction for implementing a generative AI model. In some examples, a user input may undergo some pre-processing to form the input prompt 102 which is provided.

The input prompt 102 may be associated with a user session. For example, a user may initiate a user session by accessing (e.g., by connection to and/or logging in to) a service offering generative AI capabilities. For example, a web-based interface and/or application may be implemented on a user device to initiate a user session. A user session may be associated with a particular user and/or device accessing the generative AI service and may be identified using a user and/or session identifier.

At step 204 the input prompt is stored in a session context. This is represented by the session context 104 in FIG. 1. The session context 104 may, for example, be stored in a memory of a computing system (e.g., one or more computing devices) which implements one or more of the plurality of generative AI models 110. The term session context is used herein to denote a container for storing information on which implementation of one or more generative AI models is based. For example, the session context 104 includes at least the input prompt 102 on which implementation of a generative AI model to generate a model output is based. In at least some examples and/or scenarios, a session context 104 may further comprise additional information on which implementation of a generative AI model is based. For example, the session context 104 may include one or more further inputs and/or outputs associated with the same user session.

In some scenarios, the input prompt 102 may be a first input prompt 102 associated with the user session. Alternatively, one or more earlier input prompts may have been received which are associated with the same user session. In such scenarios one or more other input prompts associated with the same user session may also be stored in the session context 104. One or more earlier input prompts may have resulted in generation of one or more earlier model outputs associated with the same user session. Such one or more earlier model outputs may also be stored in the session context 104. The session context 104 may comprise one or more previous input prompts received as part of the same user session and/or one or more previous model outputs generated as part of the same user session. In some examples all received input prompts and/or generated model outputs associated with the same user session may be stored in the session context 104. In other examples, one or more input prompts and/or model outputs may be excluded from the session context 104. For example, one or more relatively old input prompts and/or model outputs may be excluded from a session context 104 and/or only the most recent input prompts and/or model outputs associated with the user session may be included in the session context 104.

In some examples, a session context 104 may comprise additional information such as one or more prompts which do not necessarily originate from a user input. For example, a session context 104 may comprise one or more system prompts and/or one or more meta prompts. A system prompt may comprise general instructions related to how a generative AI model should operate. For example, a system prompt may comprise instructions related to how to respond to input prompts. A system prompt may define a generative AI model's behaviour, and/or may comprise guidelines which the generative AI model should adhere too. A meta prompt may, for example, comprise instructions related to how to interpret a user input. For example, a meta prompt may be used to transform (e.g., re-write) a user input into the input prompt 102 based upon which a generative AI model is implemented.

At step 206 a generative AI model is selected from the plurality of generative AI models 110 for generating a next segment of a model output. This is illustrated in FIG. 1 which routes the process flow to one of the plurality of generative AI models 110 for implementation. The generative AI model is selected from the plurality of generative AI models 110 at step 206 in dependence on the session context 104. That is, the session context 104 is provided to the routing model 106 shown in FIG. 1 and a selection of which generative AI model to route the process flow to is made in dependence on the session context 104.

Operation and configuration of the routing model 106 will be described in further detail below. The routing model 106 may be configured to select a lowest precision generative AI model which can produce a next model output segment of sufficient quality, based on the current session context 104. For example, different session contexts 104 may have different levels of difficulty associated with generating a next segment of a model output.

For session contexts 104 with a relatively low difficulty level for generating a next segment of a model output, a relatively low precision generative AI model may be selected to generate a next segment of a model output of sufficient quality. For example, for relatively low difficulty levels, each of the generative AI models 108a, 108b, 108c may generate relatively similar (or the same) model output segments regardless of their precision level. That is, a high precision level may not be needed to generate a model output segment of sufficient quality. In such a scenario, using a high precision level generative AI model to generate the next segment of model output may be computationally inefficient since a lower precision level generative AI model could instead be used to generate a similar (or the same) model output segment. It may therefore be advantageous to select a relatively low precision generative AI model to generate the next segment of model output so as to reduce the computational resources used to generate the next segment of the model output.

For session contexts 104 with a relatively high difficulty level for generating a next segment of a model output, a relatively high precision generative AI model may be selected to generate a next segment of a model output of sufficient quality. For example, for relatively high difficulty levels, each of the generative AI models 108a, 108b, 108c may generate different model output segments based on the same session context 104. For example, a relatively low precision level generative AI model may produce a model output segment which is quite different to a model output segment generated by a relatively high precision level generative AI model based on the same session context 104. That is, a relatively high precision level may be needed to generate a model output segment of sufficient quality. In such a scenario, a higher computational cost associated with using a high precision level generative AI model to generate the next segment of model output (when compared to using a lower precision level generative AI model) may be warranted, since it may have a substantial effect on the next model output segment which is generated.

At step 208 the generative AI model selected at step 206 is implemented, based on the session context 104, to generate a next segment of the model output. This is represented in FIG. 1 by the dashed arrows extending to and from the first generative AI model 108a, the second generative AI model 108b and the third generative AI model 108c and by the generated segment of model output 112. In practice, during each iteration, the process flow follows only one of the paths to and from one of the generative AI models 108a, 108b, 108c, since a single generative AI model is implemented to generate each model output segment.

Implementation of the selected generative AI model may correspond with normal implementation of the generative AI model to generate a model output segment based on a session context 104. For example, the selected generative AI model may be implemented in inference mode, based on its parameters learnt through training, to generate a model output segment. The selected generative AI model may only be implemented to generate a single model output segment at a time. For example, when the model output segments comprise tokens, the selected generative AI model may be implemented at step 208 to generate a single token. As will be described in further detail below, this may allow different generative AI models of the plurality of generative AI models 110 to be used to generate different segments (e.g., tokens) of a model output.

At step 210 of the method 200 of FIG. 2, the generated segment of model output 112 (which was generated at step 208) is added to the session context 104. This is represented in the process flow diagram of FIG. 1 by the arrow extending from the segment of model output 112 to the session context 104. The session context 104 here may comprise the inputs used by subsequent sequential iterations to generate further segments of model output 112. Adding the generated segment of model output 112 to the session context 104 may therefore serve to add the generated segment of model output 112 to the inputs used for generating the next segment of model output 112. In some examples, the session context 104 may include additional information, not all of which may be used to generate each segment of model output 112. The inputs based on which a segment of model output 112 is generated may include at least the received input prompt 102 and any segments of model output 112 already generated in response to the received input prompt 102.

In the flowchart shown in FIG. 2 the method then returns to step 206 to select a generative AI model (from the plurality of generative AI models) for generating a next segment of the model output. This subsequent implementation of step 206 corresponds with the description of step 206 above except that the session context 104 has now been updated with the segment of model output 112 generated in the previous iteration. That is, a first segment of the model output has already been generated and included in the session context 104. A generative AI model is now therefore selected for generating a next segment of model output which follows from the previously generated model output segment. This represents a new task to be performed by a generative AI model, which may have a different level of difficulty associated with it. A new selection of a generative AI model is therefore performed at step 206 to select a most appropriate generative AI model for generating the next model output segment. Depending on the session context 104 this may be the same or different to a previously selected generative AI model for generating a previous segment of the model output.

The method then proceeds to steps 208 and 210 which are performed as described above to generate a further segment of a model output, which is then added to the session context 104. The method 200 may then return to step 206 for one or more further iterations. In this way, a plurality of segments of a model output may be generated sequentially. Generating each segment of the model output comprises selecting a generative AI model (as described above with reference to step 206), implementing the selected generative AI model (as described above with reference to step 208) and adding the generated segment of model output 112 to the session context 104 (as described above with reference to step 210). Put another way an iterative process is performed, where each iteration comprises steps 206, 208 and 210.

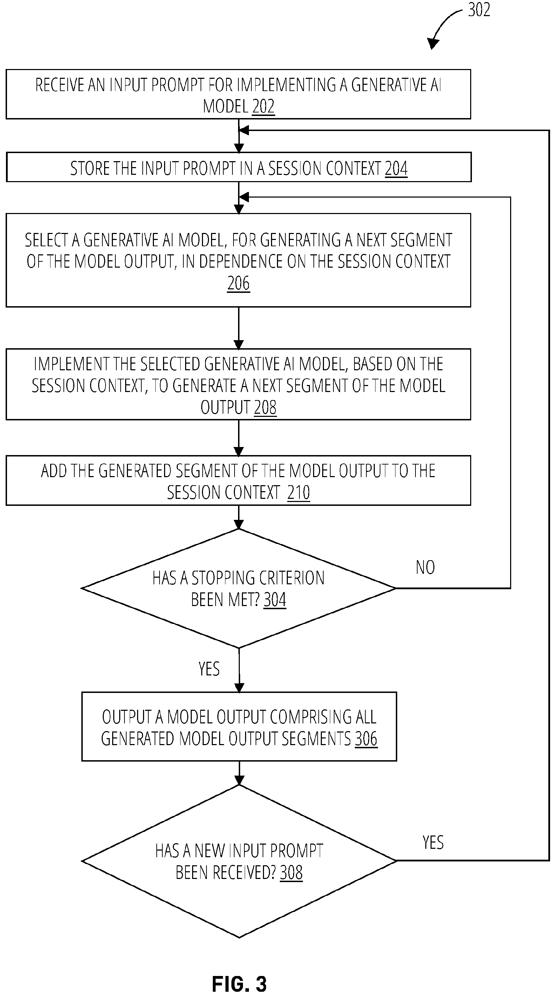

Model output segments may be sequentially generated through iterations of steps 206, 208 and 210 until all segments of a model output has been generated. For example, whilst not shown in FIG. 2, after each iteration and generation of each segment of model output 112, it may be determined whether a stopping criterion has been met. This is illustrated in FIG. 3, which comprises a flowchart of a further example method 302 of generating content. The method 302 of FIG. 3 corresponds with the method 200 of FIG. 2 except that it includes additional steps 304, 306 and 308. Steps 202, 204, 206, 208 and 210 correspond with those described above with reference to FIG. 2 and no detailed description of these steps will be provided again with reference to FIG. 3.

At step 304, following generation of a segment of model output 112 (at step 210), it is checked whether a stopping criterion has been met. The stopping criterion (when met) may indicate that sufficient model output segments have been generated to form a complete model output in response to the input prompt 102. Any suitable stopping criterion and/or combination of a plurality of stopping criteria may be used, as appropriate for the type of generative AI models being used. For example, a stopping criterion may comprise a number of generated model output segments reaching a threshold number (e.g., a token limit has been reached). A stopping criterion may comprise a model output segment being generated which comprises an end-of-sequence model output segment (e.g., an end-of-sequence token). A stopping criterion may comprise an assessment of context completion. For example, a determination may be made of whether the segments of model output 112 generated so far sufficiently address the input prompt 102. When it is determined that the segments of model output 112 generated so far sufficiently address the input prompt 102 then it may be determined that a stopping criterion has been met.

If a stopping criterion has been met at step 304 then the method 302 proceeds to step 306. If a stopping criterion has not been met at step 304 then the method returns to step 206 to begin another iteration and to generate another segment of model output 112.

At step 306 a model output is output which comprises all of the segments of model output 112, which were generated in response to the input prompt 102. Outputting the model output may, for example, comprise sending the model output to another device (e.g., a device from which the input prompt 102 was received), displaying the model output at an electronic display, and/or storing the model output in memory. In at least some examples, segments of the model output may be output before the entire model output is generated. For example, one or more segments of model output may be output to another device and/or displayed at an electronic display before the entire model output is generated. This may allow at least part of the model output to be output earlier in the generation process. In this regard at least part of step 306 may be performed in line with one or more other steps of the method 302 rather than sequentially at the conclusion of all of steps 202 to 304 as depicted in the flow chart of FIG. 3.

Once a model output has been output at step 306 the method 302 may end. Alternatively, as shown in FIG. 3 the method may proceed to step 308 at which it is checked whether a new input prompt 102 associated with the same user session is received. If a new input prompt 102 associated with the same user session is received then the method 302 may return to step 204 at which the new input prompt 102 is stored in the session context 104. The new input prompt 102 may be stored in the session context 104 without deleting one or more previous input prompts 102 and/or segments of model output 112 which may already be stored in the session context 104. That is, the session context 104 may comprise a new input prompt 102 for which a model output is to be generated, one or more previous input prompts 102 associated with the same user session and/or one or more previously generated model output segments. In this way, the generation of further segments of model output 112 may be performed in dependence, not only on the current input prompt 102, but also on one or more previous input prompts and/or model output segments associated with the same user session. This may allow the generation of segments of model output 112 to be informed by additional context associated with the same user session.

The method 302 then proceeds as described above to sequentially generate segments of model output 112 in response to the new input prompt 102 until a stopping criterion is met and a model output is output.

As described above with reference to FIG. 1, FIG. 2 and FIG. 3 a generative AI model may be selected from a plurality of generative AI models 110 for generating each segment of model output 112. In particular, for each segment of model output 112, a lowest precision level generative AI model may be selected which can produce an acceptable segment of model output 112 based on a current session context 104. In this way, a computational cost associated with generating a model output may be reduced (by utilising one or more lower precision generative AI models) whilst still maintaining model output quality. For example, the selection of a generative AI model provides access to at least one higher precision generative AI model for generating segments of model output 112 of relatively high difficulty level in order to maintain good quality segments of model output 112. However, where the difficulty level of generating a next segment of model output 112 is lower, a lower precision generative AI model may be selected in order to lower the computational cost associated with generating the next segment of model output 112. This may, for example, reduce a processing time and/or latency associated with generating the next segment of model output 112 and/or may allow for a larger number of segments of model output 112 to be generated in parallel without increasing latency. Additionally or alternatively, an amount of energy used to generate the next segment of model output 112 may be reduced.

In the methods 200, 302 and processes described above, access is provided to a plurality of generative AI models 110 for generating a next segment of model output 112 and one of the plurality of generative AI models 110 is selected for generating each segment of model output 112. In order to reduce processing time, each of the plurality of generative AI models 110 may be loaded into memory before implementing the generative AI models to generate segments of model output 112. For example, the plurality of generative AI models 110 may each be loaded into a fast access memory, such as a random access memory before the generative AI models are selected and implemented. In this way, when a generative AI model from the plurality of generative AI models 110 is selected (at step 206) for implementation (at step 208) the selected generative AI model is already loaded into memory and ready for implementation and no delay is introduced before the model can be implemented.

The methods 200, 302 and processes described above further involve the use of only one of a plurality of available generative AI models 110 at any one time to generate a next segment of model output 112 associated with a given user session. That is, for each implementation step (step 208), at least one of the plurality of generative AI models 110 is not used by a given user session. Accordingly the methods 200, 302 and processes are well suited to parallel processing of input prompts associated with a plurality of different user sessions and session contexts 104.

In at least some examples, a computing system configured to perform methods 200, 302 and processes as described herein may receive and process a plurality of input prompts 102 in parallel. Different input prompts 102 may be associated with different user sessions. Different user sessions may be assigned different user and/or session identifiers. Each input prompt 102 and user session can be processed as described above to sequentially generate segments of model output 112 in parallel with each other using the same hardware system and the same plurality of generative AI models 110. For example, the plurality of generative AI models 110 may be loaded into a shared memory which can be accessed by a plurality of user sessions in parallel with each other. In some examples, different generative AI models of the plurality of generative AI models 110 may be implemented on different hardware and/or may be loaded into different physical memory. However access to the different generative AI models may be shared across a plurality of user sessions, regardless of its implementation in hardware.

In some examples, a plurality of instances of at least one of the generative AI models may be provided. This may allow multiple instances of a generative AI model having the same precision level to be implemented in parallel, thereby increasing the number of input prompts which can be processed concurrently. In at least some examples, a number of instances of a generative AI model of at least one precision level may be scaled responsive to demand. For example, a first generative AI model having a first precision level may be found to be selected to generate a larger number of model output segments than a second generative AI model having a second precision level. In such a scenario a number of instances of the first generative AI model having the first precision level may be greater then a number of instances of the second generative AI model in order to handle the increased utilisation of the first generative AI model. The number of instances of each generative AI model of each precision level may, for example, be scaled to balance an observed load of implementations of each model.

Additionally or alternatively, the routing model 106 may also be shared and accessed by a plurality of user sessions in parallel. In some examples, a plurality of instances of a routing model 106 may be provided for parallel use across a plurality of inference processes. As described above, a routing model 106 may be implemented to select a generative AI model for each segment of model output. A routing model 106 may therefore be implemented more often than each generative AI model. Accordingly, a larger number of instances of a routing model 106 may be provided in order to handle the number of implementations. In some examples, a load balancer may be used to balance the load across a plurality of instances of a routing model 106.

Input prompts associated with different user sessions may be stored in different session contexts 104. For example, information associated with different user sessions may be separated from each other by using different session contexts 104. However, the different session context 104 may be accessed by the same plurality of generative AI models 110 to generate model outputs for each session context 104 in parallel.

A plurality of segments of model output 112 may be sequentially generated in response to each input prompt 102 in parallel with each other. For example, the iterative process described above with reference to FIG. 1, FIG. 2 and FIG. 3 may be performed for each input prompt 102, session context 104 and user session in parallel. In this way, computing resources and models may be shared to process different input prompts 102 associated with different user sessions in parallel. This may allow a system to handle a high volume of simultaneous input prompts and user sessions. Since, each input prompt 102 is processed by selecting appropriate generative AI models so as to utilise lower precision level generative AI models, where appropriate, the overall performance of the system may be improved. For example, latency associated with providing model outputs in response to input prompts and/or a number of input prompts that can be processed in parallel for a given computational resource may be improved.

As was described above, a routing model 106 may be used to select a generative AI model (from a plurality of generative AI models 110) to generate a next segment of model output 112 in dependence on a session context 104. The session context here is a session context based on which the next segment of model output 112 is to be generated. The routing model 106 may comprise at least one machine learning model. For example, the routing model 106 may be configured through training to select a lowest precision generative AI model, from the plurality of generative AI models 110, which is predicted to produce a next segment of the model output which meets an acceptability criterion. In at least some examples, the routing model 106 may be configured through training to predict, for each lower precision level generative AI model an associated measure of difference between: an output generated by the lower precision generative AI model, based on a session context, and an output generated by the highest precision generative AI model, based on the same session context. Such a prediction may then be used to determine a lowest precision generative AI model of the plurality of generative AI models 110 which meets an acceptability criterion. The acceptability criterion may, for example, comprise a predicted measure of difference being less than a threshold measure of difference.

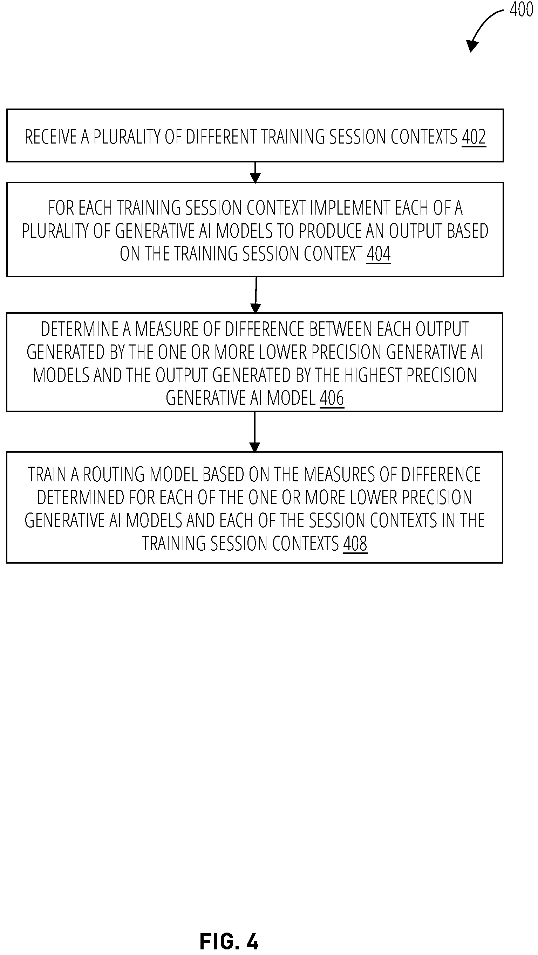

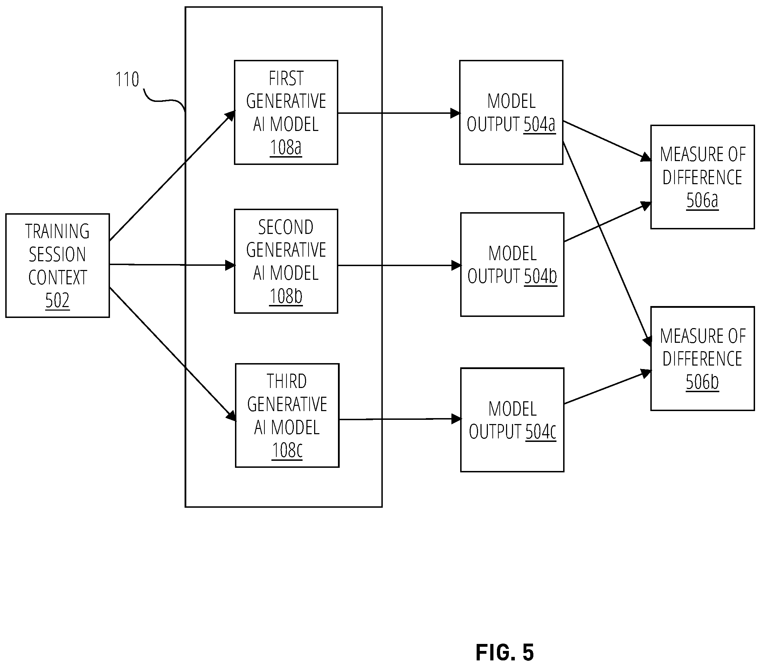

FIG. 4 is a flowchart of an example method 400 for training a routing model 106. FIG. 5 is process flow diagram illustrating a process flow associated with at least a part of the method 400 of FIG. 4. The method 400 of FIG. 4 and the process flow diagram of FIG. 5 will be described together in conjunction. The method 400 of FIG. 4 and/or the process flow represented by the flow diagram of FIG. 5 may be implemented by using one or more computing devices (and thus the method 400 be a computer implemented method 400). In examples in which a plurality of cooperating computing devices are used, this may be referred to as a computing system.

At step 402 a plurality of training session contexts are received. Receiving the training session contexts may, for example, comprise receiving training session contexts transmitted from one or more other computing devices and/or may comprise loading training session contexts from memory. The training session contexts may be associated with implementation of a generative AI model. For example, a training session context may comprise at least an input prompt for implementing a generative AI model. A training session context may further comprise one or more segments of model output representative of model output segments generated by a generative AI model in response to an input prompt in the training session context. In at least some examples, a training session context may comprise a plurality of input prompts. A training session context may comprise at least one segment of model output representative of model output segments generated by a generative AI model in response to a plurality of input prompts in the training session context.

The training session contexts may generally be representative of inputs based on which a generative AI model may be implemented when operated in inference mode. For example, as described above, a session context may generally comprise information associated with a user session and based upon which a generative AI model is implemented to generate a segment of model output.

At least some of the training session contexts may be generated synthetically. For example, one or more generative AI models (such as an LLM) may be prompted to generate input prompts which could be used to prompt a generative AI model. Such synthetically generated input prompts may then be used to prompt one or more generative AI models to generative synthetic segments of model output in response to the synthetically generated input prompts. Training session contexts may then be formed and may each include at least one synthetically generated input prompt and optionally one or more synthetically generated segments of model output (generated in response to the at least one synthetically generated input prompt included in the same training session context). In this way a plurality of session contexts may be generated which are representative of session contexts which might be used to implement a generative AI model in inference mode. In at least some examples, a highest precision (full precision) generative AI model may be implemented to synthetically generate the training session contexts.

Additionally or alternatively training session contexts may comprise recorded session contexts which are used during implementation of one or more generative AI models. For example, a generative AI model service may receive a plurality of input prompts (e.g., submitted from users of the service) and may implement one or more generative AI models to generate one or more segments of model output in response to each input prompt. The input prompts and/or generated segments of model output may be recorded and stored as training session contexts.

At step 404 each of a plurality of generative AI models 110 are implemented to generate a model output based on each of the training session contexts. This is represented for one of the training session contexts 502 in FIG. 5. As represented in FIG. 5, a training session context 502 is provided as an input to each of the plurality of generative AI models 110. Each of the plurality of generative AI models 110 generates a respective model output 504a, 504b, 504c based on the training session context 502. In particular, the first generative AI model 108a generates a first model output 504a, the second generative AI model 108b generates a second model output 504b and the third generative AI model 108c generates a third model output 504c.

As described above with reference to FIG. 1, the plurality of generative AI models 110 comprise generative AI models having different precision levels. For example, the plurality of generative AI models 110 may comprise a highest precision generative AI model having a highest precision level and one or more lower precision generative AI models having a lower precision level than a precision level of the highest precision generative AI model. In the example of FIG. 5 the first generative AI model 108a may comprise a highest precision generative AI model. The second generative AI model 108b and the third generative AI model 108c may comprise lower precision level generative AI models having lower precision levels than the first generative AI model 108a (which is the highest precision generative AI model).

The plurality of generative AI models 110 used in the process of training the routing model 106 may be the same plurality of generative AI models 110 used during the inference mode described above with reference to FIG. 1, FIG. 2 and FIG. 3. This is indicated in FIG. 5 through use of the same reference numerals to represent the plurality of generative AI models 110 as those used in FIG. 1. Any of the features of the plurality of generative AI models 110 described above with reference to FIG. 1, FIG. 2 or FIG. 3 may also apply to the plurality of generative AI models 110 of FIG. 5.

The model outputs 504a, 504b, 504c generated by each of the pluralities of generative AI models 110 may comprise a segment of model output as described above. However, in at least some examples, the model outputs 504a, 504b, 504c generated during the training process may each comprise probability distributions. The probability distributions may comprise a probability associated with each of a plurality of candidate next segments of a model output. The probabilities represent a probability of outputting the candidate next segment based on the training session context 502. For example, each implementation of a generative AI model may result in output of one of a discrete number of candidate output segments. For instance, where the plurality of generative AI models 110 comprise LLMs, each model output segment generated by an LLM may correspond with one of a discrete number of candidate output tokens. As part of the process of determining a model output segment to generate, a generative AI model may produce a probability distribution comprising a probability associated with each of the candidate model output segments (e.g, tokens). The probability distribution may then be used to determine a model output segment from the candidate model output segments. For example, the generative AI model may sample from the probability distribution to select a candidate output segment for output. Model outputs 504a, 504b, 504c in the form of probability distributions may therefore already be generated as part of normal operation of the plurality of generative AI models 110.

At step 406 a measure of difference between each model output 504b, 504c generated by a lower precision generative AI model and a model output 504a generated by the highest precision generative AI model is determined. In the example of FIG. 5, the first generative AI model 108a comprises the highest precision generative AI model. The second generative AI model 108b and third generative AI model 108c comprise lower precision generative AI models. Accordingly, a first measure of difference 506a is determined which comprises a measure of difference between the model output 504a generated by the first generative AI model 108a (the highest precision generative AI model) and the model output 504b generated by the second generative AI model 108b. A second measure of difference 506b is determined which comprises a measure of difference between the model output 504a generated by the first generative AI model 108a (the highest precision generative AI model) and the model output 504c generated by the third generative AI model 108c.

Where the model outputs 504a, 504b, 504c comprise probability distributions (as described above) the measures of difference 506a, 506b may comprise a measure of relative entropy of the probability distributions. For example, the measures of difference 506a, 506b may comprise a Kullback-Leibler divergence or other similar divergence measure. In general, the measures of difference 506a, 506b are representative of divergence between model outputs generated by the plurality of generative AI models 110 and based on the same training session context 502.

The measures of difference 506a, 506b may equivalently be thought of as a measure of difficulty associated with generating a next segment of model output 112 and based on the training session context 502. As was described above, different session contexts may have different levels of difficulty associated with generating a next segment of a model output.

For a training session context 502 associated with a relatively low level of difficulty of generating a next segment of model output, at least one of the second and third model outputs 504b, 504c may be relatively similar to the first model output 504a generated for the same training session context 502. That is, one or more of the lower precision generative AI models 108b, 108c may generate a similar output to the highest precision generative AI model 108a. At least one of the measures of difference 506a, 506b may therefore be relatively small, which may be associated with a relatively low level of difficulty for the training session context 502. Such a measure of difference 506a, 506b may indicate a training session context 502 for which the routing model 106 could select one of the lower precision generative AI models 108b, 108c.

Conversely for a training session context 502 associated with a relatively high level of difficulty of generating a next segment of model output, at least one of the second and third model outputs 504b, 504c may be relatively different to the first model output 504a generated for the same training session context 502. That is, one or more of the lower precision generative AI models 108b, 108c may generate a relatively different output to the highest precision generative AI model 108a. At least one of the measures of difference 506a, 506b may therefore be relatively large, which may be associated with a relatively high level of difficulty for the training session context 502. Such a measure of difference 506a, 506b may indicate a training session context 502 for which the routing model 106 could select a higher precision level generative AI model in order to generate a higher quality segment of model output than would be generated by a lower precision generative AI model.

The training session context 502 and the associated measures of difference 506a, 506b may form a training data record for inclusion in a training data set suitable for training the routing model 106. In particular, the training session context 502 coupled with the measures of difference 506a, 506b are representative of a difficulty level associated with the training session context 502 and may be used to train the routing model 106 to determine predicted measures of difference for a given session context 104.

Additionally or alternatively, the measures of difference 506a, 506b may be used to determine a lowest precision generative AI model having an associated measure of difference 506a, 506b which is less than a threshold measure of difference (which may represent an acceptability criterion being met). That is, the measures of difference 506a, 506b may be used to select a most appropriate generative AI model from the plurality of generative AI models 110 for the training session context 502. In such examples, the training session context 502 and the selected generative AI model from the plurality of generative AI models 110 may form a training data record for inclusion in a training data set suitable for training the routing model 106. The training session context 502 coupled with a selected generative AI model is representative of an optimum selection of generative AI model for that training session context 502 and may be used to train the routing model 106 to select an appropriate generative AI model for a given session context 104.

The steps described above with reference to FIG. 5 may be performed for each of the plurality of training session contexts so as to generate a training dataset comprising a plurality of training data records, each training data record corresponding to a training session context.

At step 408 a routing model 106 is trained based on the determined measures of difference 506a, 506b for each of the one or more lower precision generative AI models and each of the training session contexts.

As was described above, in some examples, a training dataset (based on which the routing model 106 is trained) may comprise a plurality of training data records each comprising a training session context 502 and associated measures of difference 506a, 506b. In such examples, the routing model 106 may be trained (based on the training dataset) to determine, for an input session context, a predicted measure of difference between outputs generated by each of the lower precision generative AI models 108b, 108c and an output generated by the highest precision generative AI model 108a. When run in inference mode, the routing model 106 may then be configured to determine a lowest precision generative AI model having an associated predicted measure of difference which is less than a threshold measure of difference (which may represent an acceptability criterion being met).

As was further described above, in some examples, a training dataset (based on which the routing model 106 is trained) may comprise a plurality of training data records each comprising a training session context 502 and a selected generative AI model for that training session context 502. The selected generative AI model in each training data record may represent a lowest precision generative AI model which met an acceptability criterion for the training session context 502 in the training dataset. Such a selection was made based on determined measures of difference and as such the selected generative AI model in each training dataset is representative of the determined measures of difference. Accordingly, the routing model is trained based on the measures of difference determined at step 406. In such examples, the routing model 106 may be trained (based on the training dataset) to directly select a generative AI model based for an input session context. When run in inference mode, the routing model 106 may therefore directly select, based on an input session context 104, a generative AI model for generating a next segment of model output 112.

The routing model may have any suitable architecture, may comprise any suitable machine learning model and may be trained using any suitable machine learning method. In at least some examples, the routing model 106 may be configured to extract contextual features from an input session context 104 and select a generative AI model based on the extracted contextual features. For example, the routing model 106 may be configured to determine from the extracted contextual features, a lowest precision generative AI model, from the plurality of generative AI models 110, which will produce an output which meets an acceptability criterion. Contextual features may, for example, be extracted using a transformer encoder. A transformer encoder may be configured to extract contextual features that represent the nuanced meaning and complexity associated with a current input prompt, within the broader user session.

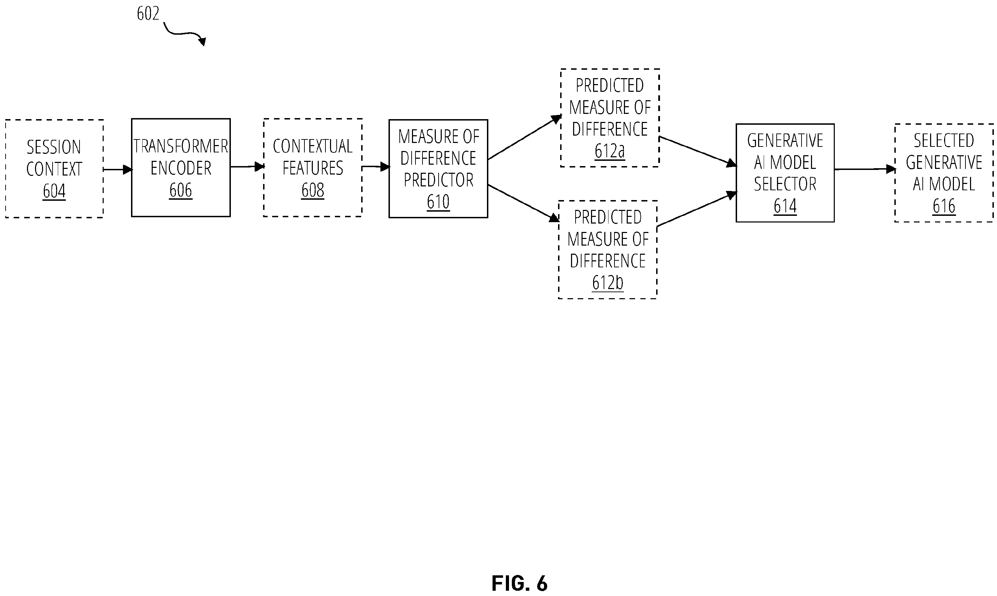

FIG. 6 is a schematic illustration of the architecture and process flow of an example routing model 602. The routing model 602 comprises a transformer encoder 606, a measure of difference predictor 610 and generative AI model selector 614. These components are intended to designate functional components and do not imply any limitation or separation in hardware used to implement the routing model 602. The routing model 602 may be implemented by any suitable one or more computing devices. In examples in which a plurality of cooperating computing devices are used, this may be referred to as a computing system. Elements illustrated with solid line boxes in FIG. 6 designate functional components of the routing model 602. Elements illustrated with dashed line boxes in FIG. 6 designate inputs and/or outputs for one or more function components.

The transformer encoder 606 may comprise a relatively lightweight transformer encoder 606. For example, the transformer encoder 606 may comprise a reduced number of layers and/or attention heads compared to a transformer encoder used in a typical LLM. Accordingly the transformer encoder 606 may be relatively computationally efficient when compared to a transformer encoder comprising a greater number of layers and/or attention heads. The transformer encoder 606 is configured to receive a session context 604. The session context 604 may comprise any form of session context as described herein. The session context 604 may be formatted as embeddings (e.g., vector embeddings) representative of the session context.

The transformer encoder 606 is configured to extract contextual features 608 from the session context 604 which are output from the transformer encoder 606. The contextual features 608 are provided as an input to the measure of difference predictor 610. The measure of difference predictor 610 may be configured through training to predict a measure of difference 612a, 612b between model outputs generated by each of one or more lower precision generative AI models and a highest precision generative AI model. For example, as was described above a training data set may be generated comprising sets of training session contexts 502 and determined measures of difference 506a, 506b. In at least some examples, the training session contexts in the training dataset may be represented by contextual features extracted from training session contexts 502 (which may, for example, be generated using the transformer encoder 606).

The training data set may be used to train the measure of difference predictor 610 to predict respective measures of difference 612a, 612b for each lower precision generative AI model and based on the contextual features 608 representing the session context 604. The measure of difference predictor 610 may, for example, comprise one or more neural networks such as a multi-layer perceptron. Such one or more neural networks may be relatively small (e.g., comprising relatively fewer layers and nodes). Whilst not shown in FIG. 6, in at least some examples, the measure of difference predictor 610 may comprise a separate predictor for each lower precision generative AI model. For example, separate neural networks (e.g., multi-layer perceptrons) may be separately trained to predict a measure of difference associated with each lower precision generative AI model. In such examples, the training dataset described above may be separated into separate training datasets comprising measures of difference associated with each lower precision generative AI model. The separated training datasets may then each be used to train a respective predictor for each lower precision generative AI model. In the example, shown in FIG. 6 two predicted measures of difference 612a, 612b are output, corresponding to two lower precision generative AI models. However, in other examples a different number of generative AI models may be used corresponding to a different number of predicted measures of difference (and, for example, a different number of predictors).

The predicted measures of difference 612a, 612b are provided as an input to the generative AI model selector 614. The generative AI model selector 614 may be configured to select a generative AI model based on the predicted measures of difference 612a, 612b. For example, the generative AI model selector 614 may select the lowest precision generative AI model which has an associated predicted measure of difference 612a, 612b which is less than a threshold measure of difference. Where none of the predicted measures of difference 612a, 612b corresponding to the lower precision generative AI models are below a threshold measure of difference, then the generative AI model selector 614 may select the highest precision generative AI model (which by definition has an associated measure of difference of zero). The selected generative AI model 616 is output by the generative AI model selector 614 and may form an output of the routing model 602.

Whilst an example architecture and operation of the routing model 602 has been described above with reference to FIG. 6 it will be appreciated that different architectures and/or operation may be used to realise corresponding functionality.

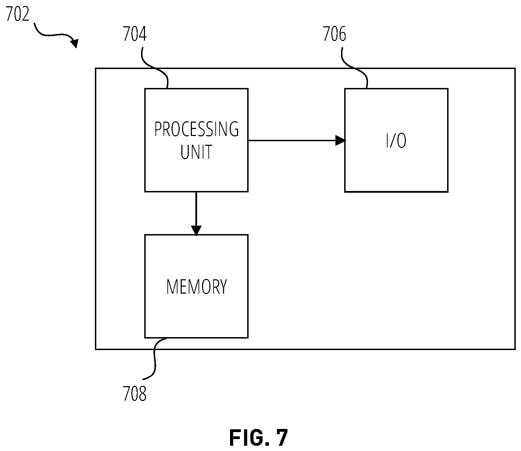

Various methods have been described herein in which some of the method steps may be implemented on any suitable electronic device (such as a computing device) and/or combination of electronic devices (e.g. computing devices). FIG. 7 is a schematic illustration of an example electronic device 702 which may be used to implement all or part of any method described herein. For example, one or more electronic devices 702 of the type shown in FIG. 7 and as described below may be used to implement all or part of a method of generating content, and/or training a routing model as described herein. For example, one or more electronic devices 702 of the type shown in FIG. 7 and as described below may be used to implement all or part of a method 200 as described above with reference to FIG. 2, all or part of a method 302 as described above with reference to FIG. 3 and/or all or part of a method 400 as described above with reference to FIG. 4. One or more electronic devices 702 of the type shown in FIG. 7 and as described below may be used to implement one or more generative AI models and/or routing models as described herein.

The electronic device 702 may comprise a computing device. The electronic device 702 may include at least one processing unit 704, memory 708 and an input/output interface 706 (I/O). The processing unit 704 may include any suitable processor and/or combination of processors. For example, the processing unit 704 may include one or more of a Central Processing Unit (CPU) and a Graphical Processing Unit (GPU). The memory 708 may include volatile memory and/or non-volatile/persistent memory. The memory 708 may, for example, be used to store data such as an operating system, instructions to be executed by the processing unit (e.g. in the form of software to be executed by the processing unit), configuration information related to the electronic device 702, and/or a model parameters as described herein. In some examples, the memory 708 may be used to store instructions for executing any of the methods described herein.

At least the processing unit 704 is connected to the input/output interface 706. The input/output interface 706 may facilitate communication with one or more other devices. For example, the input/output interface 706 may be operable to transmit and/or receive communications to/from other devices in a network. The input/output interface 706 may, for example, comprise one or more antennas to facilitate wireless communication with one or more other devices and/or wired interfaces to facilitate wired communication with one or more other devices.

Optionally, the electronic device 702 may further include a display (not shown). The display may comprise any suitable electronic display such as a touch sensitive display. The display may be connected to at least the processing unit 704. The processing unit 704 may generate display signals which are sent to the display in order to cause the display information.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer implemented method of generating content, the method comprising:
receiving an input prompt for implementing a generative artificial intelligence, AI, model;
storing the input prompt in a session context; and
sequentially generating a plurality of segments of a model output in response to the input prompt, wherein generating each segment of the model output comprises:
selecting a generative AI model, from a plurality of generative AI models, for generating a next segment of the model output, wherein the plurality of generative AI models comprise models having different precision levels and wherein the generative AI model is selected from the plurality of generative AI models in dependence on the session context;
implementing the selected generative AI model, based on the session context, to generate a next segment of the model output; and
adding the generated segment of the model output to the session context.

2. The computer implemented method of claim 1, wherein selecting a generative AI model, from a plurality of generative AI models, comprises predicting a lowest precision generative AI model, from the plurality of generative AI models, which is predicted to produce a next segment of the model output, based on the session context, which meets an acceptability criterion.

3. The computer implemented method of claim 1 or 2, wherein selecting a generative AI model, from a plurality of generative AI models, comprises:
providing the session context to a routing model and receiving an indication of a selected generative AI model output by the routing model in dependence on the session context,
wherein the routing model is configured through training to select a lowest precision generative AI model, from the plurality of generative AI models, which is predicted to produce a next segment of the model output which meets an acceptability criterion.

4. The computer implemented method of claim 3, wherein the plurality of generative AI models comprise a highest precision generative AI model and one or more lower precision generative AI models having a lower precision level than a precision level of the highest precision generative AI model, and
wherein the routing model is configured through training to predict, for each lower precision level generative AI model an associated measure of difference between:
an output generated by the lower precision generative AI model, based on the session context, and
an output generated by the highest precision generative AI model, based on the same session context, and
wherein the routing model is configured to determine a lowest precision generative AI model of the plurality of generative AI models having an associated predicted measure of difference which is less than a threshold measure of difference.

5. The computer implemented method of claim 3 or 4, wherein the routing model is configured to extract contextual features from an input session context and determine, based on the extracted contextual features, a lowest precision generative AI model, from the plurality of generative AI models, which will produce an output which meets the acceptability criterion.

6. The computer implemented method of any one of claims 2 to 5, wherein the plurality of generative AI models comprise a highest precision generative AI model and one or more lower precision generative AI models having a lower precision level than a precision level of the highest precision generative AI model, and
wherein each of the one or more lower precision generative AI models has an associated predicted measure of difference between:
an output generated by the lower precision generative AI model, based on the session context, and
an output generated by the highest precision generative AI model, based on the same session context, and
wherein a lower precision generative AI model meeting the acceptability criterion comprises the associated predicted measure of difference for that lower precision generative AI model being less than a threshold measure of difference.

7. The computer implemented method of any one of claims 4 to 6, wherein the output generated by the lower precision generative AI model, based on the session context and the output generated by the highest precision generative AI model, based on the same session context, each comprise a probability distribution, and wherein the associated measure of difference comprises a measure of difference between the probability distributions, and
wherein each of the probability distributions comprise a probability associated with each of a plurality of candidate next segments of a model output, the probabilities representing a probability of outputting the candidate next segment based on the session context.

8. The computer implemented method of any one of claims 1 to 7, wherein:
the session context is associated with a user session and wherein the session context comprises: one or more previous input prompts received as part of the same user session, and/or one or more previous model outputs generated as part of the same user session, and/or,
the plurality of segments of the model output comprise tokens, and/or
the plurality of generative AI models comprising models having different precision levels, comprise generative AI models configured to operate using different bit-length representations, and/or
the plurality of generative AI models comprising models having different precision levels, comprise generative AI models having different model sizes, and/or
the method comprises loading each of the plurality of generative AI models into memory prior to sequentially generating the plurality of segments of the model output.

9. The computer implemented method of any one of claims 1 to 8, wherein the method comprises:
receiving a plurality of input prompts related to different user sessions;
storing the input prompts in different session contexts; and
sequentially generating a plurality of segments of a model output in response to each input prompt in parallel with each other, wherein generating each segment of the model output for each model input comprises:
selecting a generative AI model, from the plurality of generative AI models, for generating a next segment of the model output, wherein the generative AI model is selected from the plurality of generative AI models in dependence on the session context corresponding to the input prompt for which the model output is being generated;
implementing the selected generative AI model, based on the session context corresponding to the input prompt for which the model output is being generated, to generate a next segment of the model output; and
adding the generated segment of the model output to the session context corresponding to the input prompt for which the model output is being generated.

10. A computer implemented method of training a routing model, the method comprising:
receiving a plurality of different training session contexts;
for each training session context:
implementing each of a plurality of generative AI models to produce an output based on the session context, wherein the plurality of generative AI models comprise a highest precision generative AI model and one or more lower precision generative AI models having a lower precision level than a precision level of the highest precision generative AI model;
determining a measure of difference between each output generated by the one or more lower precision generative AI models and the output generated by the highest precision generative AI model; and
training a routing model based on the measures of difference determined for each of the one or more lower precision generative AI models and each of the training session contexts, wherein the routing model is trained to determine, for an input session context, a lowest precision generative AI model, from the plurality of generative AI models, which will produce an output which meets an acceptability criterion.

11. The computer implemented method of claim 10, wherein a generative AI model meeting the acceptability criterion comprises the measure of difference for that generative AI model with respect to a highest precision generative AI model being less than a threshold measure of difference.
and/or wherein the routing model is trained to determine, for an input session context, a predicted measure of difference between outputs generated by each of the lower precision generative AI models and an output generated by the highest precision generative AI model.

12. The computer implemented method of claim 10 or 11, wherein the outputs produced by the plurality of generative AI models, based on the training session context, each comprise a probability distribution and wherein each of the probability distributions comprise a probability associated with each of a plurality of candidate next segments of a model output, the probabilities representing a probability of outputting the candidate next segment based on the training session context.
wherein optionally determining a measure of difference between an output generated by a lower precision generative AI models and an output generated by the highest precision generative AI model, comprises determining a measure of relative entropy of the probability distribution generated by the lower precision generative AI model and the probability distribution generated by the highest precision generative AI model.

13. A computing system configured for generating content, the computing system being configured to:
receive an input prompt for implementing a generative artificial intelligence, AI, model;
store the input prompt in a session context; and
sequentially generate a plurality of segments of a model output in response to the input prompt, wherein generating each segment of the model output comprises:
selecting a generative AI model, from a plurality of generative AI models, for generating a next segment of the model output, wherein the plurality of generative AI models comprise models having different precision levels and wherein the generative AI model is selected from the plurality of generative AI models in dependence on the session context;
implementing the selected generative AI model, based on the session context, to generate a next segment of the model output; and
adding the generated segment of the model output to the session context.

14. A computing system configured for training a routing model, the computing system being configured to;
for each training session context:
implement each of a plurality of generative AI models to produce an output based on the session context, wherein the plurality of generative AI models comprise a highest precision generative AI model and one or more lower precision generative AI models having a lower precision level than a precision level of the highest precision generative AI model;
determine a measure of difference between each output generated by the one or more lower precision generative AI models and the output generated by the highest precision generative AI model; and
train a routing model based on the measures of difference determined for each of the one or more lower precision generative AI models and each of the training session contexts, wherein the routing model is trained to determine, for an input session context, a lowest precision generative AI model, from the plurality of generative AI models, which will produce an output which meets an acceptability criterion.

15. A computer readable medium storing instructions, which when executed, cause a method according to any one of claims 1 to 12 to be implemented.
